Europäisches Patentamt

(19) European Patent Office    (11) Publication number:    **0 042 682**

Office européen des brevets             **A1**

(12)     **EUROPEAN PATENT APPLICATION**

(21) Application number: **81302483.3**

(22) Date of filing: **04.06.81**

(51) Int. Cl.³: **F 15 B 11/16**
            **B 62 D 5/06, B 60 T 13/14**

(30) Priority: **24.06.80 GB 8020574**
       **13.02.81 GB 8104625**

(43) Date of publication of application:
    **30.12.81 Bulletin 81/52**

(84) Designated Contracting States:
    **DE FR IT NL SE**

(71) Applicant: **CAM GEARS Limited**
    **45, Wilbury Way Hitchin**
    **Hertfordshire SG4 0TU(GB)**

(72) Inventor: **Adams, Frederick John**
    **"Pelba" 27 Princes Road**
    **Clevedon Avon(GB)**

(74) Representative: **Walters, Frederick James et al,**
    **Urquhart-Dykes & Lord 47 Marylebone Lane**
    **London W1M 6DL(GB)**

(54) An hydraulic system and vehicle including same.

㊐ An hydraulic system and a vehicle which includes such a system.

Fluid pressure available from a vehicle engine driven pump (5) actuates a power assisted steering gear (1) under control of an open centre valve (2). Connected in series with the valve (2) is an open centre valve (4) which controls actuation of the clutch or brake booster (3). The valve (4) is connected in series with a closure valve (19) controlling fluid flow to the rotor of an engine cooling fan (18). Relief valves (10) (11) and (22) shunt the valves (2) (4) and (19) respectively and the fluid pressure operated devices (1) (3) and (18) respectively controlled by the valves (2) (4) and (19).

The relief valves (10) (11) and (22) are responsive to predetermined fluid pressure differentials which are derived immediately upstream and downstream of the valves (2) (4) and (19) and the fluid pressure operated devices (1) (3) and (18) respectively controlled by those valves so that the relief valves respond to ensure that a portion of the fluid pressure is always available from the pump (5) to operate each of the devices (1) (3) and (18).

Fig.5.

- 1 -

TITLE

"An hydraulic system and vehicle including same"

DESCRIPTION

This invention relates to an hydraulic system and to a vehicle which includes such a system.

More particularly the invention concerns an hydraulic system which incorporates two or more valves at least one of which is open centre and which respectively control actuation of fluid pressure operated means such as a servo motor, a power assistance ram, or a rotor such as in a cooling fan. An open centre valve, as is well known in the art, has a neutral condition in which fluid under pressure from an appropriate pressure source (such as a pump) passes through the valve without effect on the actuation of the fluid pressure operated means respectively associated with that valve; upon adjustment of the valve from its neutral condition fluid under pressure from the source is directed, usually progressively, as appropriate to actuate the pressure operated means. Examples of an open centre valve for hydraulic servo systems for vehicles are disclosed in our U.K. Patent Specification No. 1,456,836. With known systems of the kind mentioned above difficulties can occur in ensuring that when an open centre valve is adjusted from its neutral condition to actuate its respective pressure operated means, fluid pressure operated means which is respectively controlled by one or more of the other valves which may be in the system is not starved of fluid pressure. To alleviate this problem it has hitherto been proposed to provide discrete fluid pressure sources for the individual valves in the system (which is of course expensive) or alternatively to provide a fluid pressure source which is common to all of the valves but the pressure output from which common source is divided into separate flows for each valve by an appropriate flow divider device. While many of these prior proposals are satisfactory from a performance point of view, they can prove expensive (as aforementioned when two or more fluid pressure pumps are provided)

0042682

- 3 -

and they can prove wasteful of power (where the output from a common pump passes to a flow divider since the total displacement of the pump is the sum of the fluid flow required by the individual pressure operated means which are respectively controlled by the valves). It is an object of the present invention to provide an hydraulic system having an open centre valve and which may alleviate the aforementioned disadvantages.

According to the present invention there is provided an hydraulic system comprising

first and second fluid pressure operated means;

an open centre valve controlling operation of the first said means;

a second valve controlling operation of the second said means;

a fluid pressure source;

said valves being connected in series with each other and with the pressure source and wherein each said valve and the fluid pressure operated means controlled thereby is shunted by a relief valve, the relief valves being responsive respectively to predetermined fluid pressure differentials which are derived immediately upstream and downstream of the valves and fluid pressure operated means which they respectively shunt.

By the present invention the open centre valve, when in its neutral or open centre condition, permits fluid under pressure to flow continuously from the source and through that valve while the first fluid pressure operated means remains inoperative; however, if the open centre valve is adjusted from its neutral condition fluid under pressure is directed to actuate the first fluid pressure operated means. The second valve similarly directs fluid under pressure to actuate the second fluid pressure operated means and this valve may be, for example, a second open centre valve or a closure valve (possibly a closed centre valve) which closure valve is located upstream of and in series with the said second means so that the opening and closing (possibly progressively) of the closure valve controls fluid flow to actuate the said second means. In the absence of the relief valves the adjustment of the or an open centre valve from its neutral condition to actuate the pressure operated means associated therewith or the closure of the aforementioned closure valve would tend to starve the or each other valve which is downstream or upstream thereof of fluid pressure - to the possible extent that no pressure is available to operate the fluid pressure operated means associated with the said downstream valve; however by providing the relief valves in accordance with the present invention, such relief valves may be appropriately set to ensure that a proportion of the fluid pressure is always available from the pressure source to operate each of the pressure operated means. This latter advantageous feature is irrespective of the fact that the valves are connected in series to permit the use of a single fluid pressure pump of relatively low displacement (as compared with such a pump which is required with the aforementioned flow divider type system).

The system of the present invention was primarily developed for use in a vehicle in which an open centre valve serves to control actuation of a power booster device such as an hydraulically operated clutch or brake booster and the second valve when in the form of a second open centre valve may control actuation of an hydraulic ram or similar device as is well known in the art for providing power assistance to vehicle steering or when in the form of a closure valve may control actuation of a rotor, for example in a cooling fan. When the second valve is a simple closure valve this may be adjusted automatically, for example as a thermostatic valve in the case where the second fluid pressure operated means is a vehicle engine cooling fan. Further in accordance with the present invention therefore there is provided a vehicle which includes an hydraulic system as specified above as being in accordance with the invention. In such a vehicle it is preferred that the open centre valve controls actuation of an hydraulically operated power booster device and the second valve is either an open centre valve which controls actuation of power assistance means for vehicle steering or a closure valve which is located upstream of and in series with a rotor the actuation of which it controls.

Embodiments of hydraulic systems constructed in accordance with the present invention will now be described, by way of example only, with reference to the accompanying illustrative drawings, in which:

Figure 1 diagrammatically illustrates a first system applied to a vehicle to provide a power assisted vehicle steering facility and a brake or clutch booster facility;

Figure 2 illustrates a modified form of relief valve suitable for use in the system of Figure 1;

Figure 3 shows the valve of Figure 2 incorporated in part of the system of Figure 1;

Figure 4 diagrammatically illustrates a second system applied to a vehicle to provide a power assisted vehicle steering facility and an engine cooling facility, and

Figure 5 diagrammatically illustrates a third system applied to a vehicle to provide the three facilities provided by the systems in Figures 1 and 4.

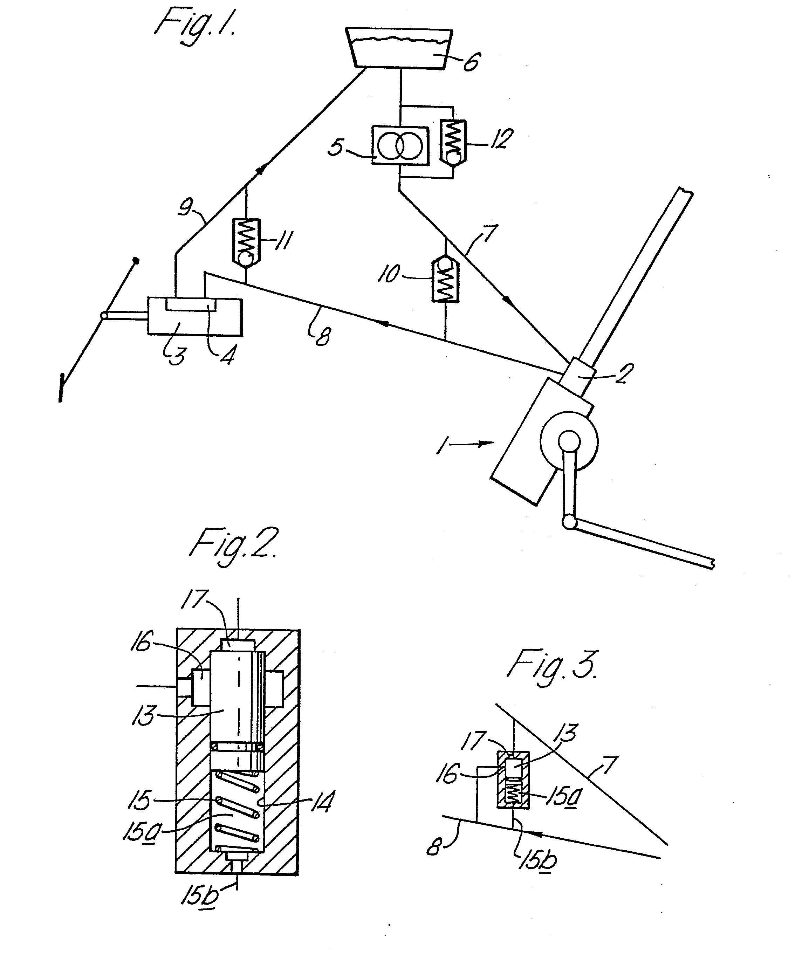

The system of Figure 1 includes a power assisted vehicle steering gear 1 actuation of which is controlled by an open centre valve 2 and a booster device 3 for a braking or a clutch system of the vehicle and actuation of which is controlled by an open centre valve 4. The steering gear 1 although being illustrated as a recirculating ball nut gear suitable for a heavy vehicle can be of any other conventional type such as a rack and pinion gear; similarly the open centre valve 2 for controlling the power assistance provided to the gear 1 can be of conventional type such as that disclosed in our U.K. Patent Specification No. 1,470,975 . The booster device 3 and its open centre control valve 4 may be of the form described with reference to Figure 2 in our U.K. Specification No. 1,456,836, and again it will be appreciated that any other conventional form of such device with an appropriate open centre valve can be used.

The open centre valves 2 and 4 have respective inlet and outlet ports and with these valves in a neutral, open centre, condition fluid under pressure may flow from the inlet port to the outlet port of the respective valves without effecting actuation of the steering gear or the booster device associated therewith. The source of fluid under pressure for the system is provided by a pump 5 (preferably but not necessarily of the constant flow type) which is conveniently driven by the vehicle's engine and draws fluid from an hydraulic reservoir 6. The fluid pressure outlet from pump 5 communicates through passage 7 with the inlet port of open centre valve 2 while the outlet port of this valve communicates through passage 8 with the inlet port of open centre valve 4. The outlet port of the valve 4 communicates through passage 9 with the reservoir 6 and it will therefore be apparent that the pump 5 and the open centre valves 2 and 4 are all connected in series to form a circuit with the reservoir 6. Shunting the open centre valve 2 and the steering gear 1 is a relief valve 10 in the form of a spring loaded non-return ball valve which is responsive to a predetermined fluid pressure differential derived between the passages 7 and 8 immediately upstream and downstream of the respective inlet and outlet ports of the valve 2. A further relief valve 11 is provided which is a spring loaded non-return ball valve similar to the valve 10 and shunts the open centre valve 4 and the booster device 3. The relief valve 11 is responsive to a predetermined fluid pressure differential which develops across the passages 8 and 9 immediately upstream and downstream of the respective inlet and outlet ports of the valve 4.

Upon adjustment of, say, the open centre valve 2 from its neutral condition the flow of fluid through that valve will remain constant as fluid pressure is applied to actuate the power assistance means for the steering gear 1. In the event that the extreme case is approached where fluid through the open centre valve 2 would cease and the passage 8 becomes increasingly starved of fluid flow, pressure develops in passage 7 to create a pressure differential across the relief valve 10 and at a predetermined differential pressure the valve 10 reacts and opens to permit fluid pressure flow from the pump 5 to the open centre valve 4. Consequently by appropriate adjustment or selection of the relief valve 10 it is possible to ensure that the open centre valve 4 and thereby the booster device 3 is never fully starved of fluid pressure and sufficient fluid pressure can always be available to ensure adequate operation of the booster device 3. In the event that the open centre valve 4 is operated to effect actuation of the booster device 3 and to an extent that fluid flow from the inlet port to the outlet port of the valve 4 ceases, a fluid pressure differential develops between the passages 8 and 9 and at a predetermined fluid pressure differential the valve 11 reacts and opens to permit fluid flow therethrough from the passage 8 to the passage 9 and thereby to the reservoir 6. The effect of this latter fluid flow is to permit fluid flow through either or both the open centre valve 2 and the relief valve 10 (depending upon the state of valve 2). When the relief valve 11 is open and fluid flow through the system is by way of the open centre valve 2 then a proportion of fluid under pressure will always be available to effect operation of the power assistance means for the steering gear 1.

From the practical view point if it is assumed that the pump 5 provides an output of 2,000 psi (which, conveniently, is determined by a pressure relief valve 12 associated with, and usually constructed as an integral part of, the pump 5) and relief valve 10 is set to react and open at 1,000 psi, then complete closing of the open centre valve 2 by operation of the steering gear will cause the relief valve 10 to open and direct fluid to the open centre valve 4 for actuation of the booster 3. Thus even if the power assistance means for the steering gear 1 is demanding fluid pressure from the system at 1,000 psi there is still a further 1,000 psi available for operation of the booster 3. In the event that the open centre valve 4 is operated to an extent which cuts off fluid flow therethrough, the relief valve 11 can be set to ensure that there is sufficient fluid flow within the system to permit actuation of the power assistance means for the steering gear 1. For example, if the relief valve 11 is selected or adjusted to open at a pressure differential of 1,000 psi it will be appreciated that even under the severest conditions of operation of the brake or clutch booster 3, 1,000 psi will be available for actuation of the power assistance steering gear 1.

It will be realised that any desired proportion or ratio can be used for the setting or selection of the relief valves 10 and 11 including such settings
whereby the sum of the pressure differentials
required to open the relief valves 10 and 11 is
greater than the output of the pump 5 (as determined
by the relief valve 12);   the reason for this is that
the occurrence of maximum pressures simultaneously in both the
power assistance steering means 1 and the brake
or clutch booster device 3 would be extremely rare
in practice.

If required the pressure relief valve 12 can be
omitted since the relief valves 10 and 11 will
effectively protect the total system.

It will be realised that the relief valves 10
and 11 are not necessarily of the spring loaded ball
type and can, for example, be of the spring loaded
plunger type shown in Figure 2.   In Figure 2 a
plunger or piston 13 is slidable in a cylinder 14 and
is spring loaded at 15 in a pressure chamber 15a to
normally close an outlet port 16 to communication
with a pressure port 17.   The port 17
is in constant communication with the
end face of the plunger 13 and when sufficient pressure is available at this port to displace the plunger 13 sufficiently against the loading of spring 15, ports 17 and 16 communicate with each other. In use of the relief valve of Figure 2, for example, in substitution for the valve 10 of Figure 1 and shunting the valve 2, as shown in Figure 3 the pressure port 17 is in constant communication with passage 7, the chamber 15a is in constant communication through a passage 15b with passage 8, and the outlet port 16 is also in constant communication with passage 8 so that the operation and effect of the plunger valve are substantially the same as that of the ball valves previously described.

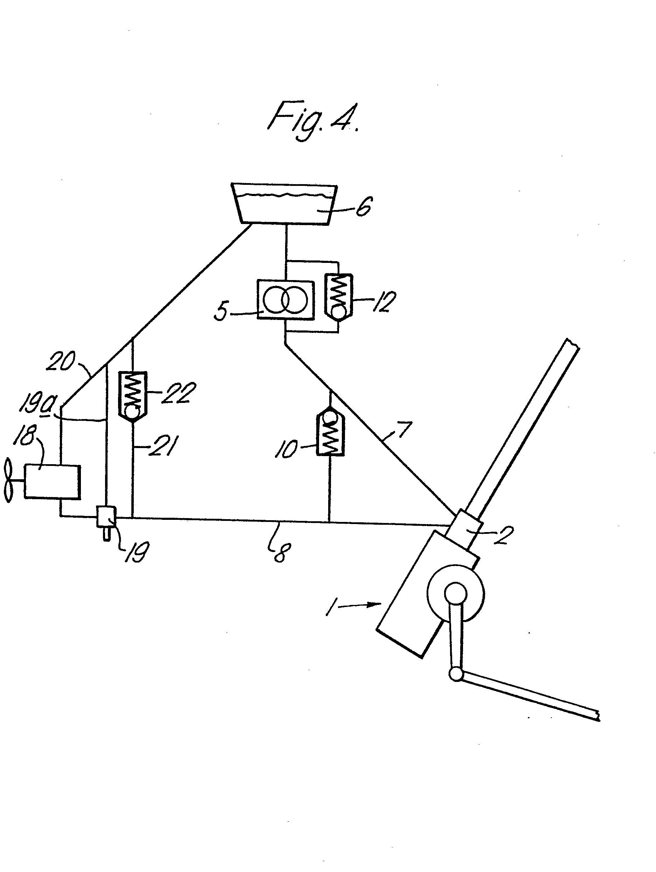

In the system of Figure 4 the brake booster and its associated open centre valve has been omitted and the outlet from the open centre valve 2 is connected in series through passage 8 with the rotor chamber of a fluid driven engine cooling fan 18. The passage 8 communicates with the fan 18 by way of a thermostatically controlled flow directional valve 19 which is in series with and is located upstream of the fan 18. The fluid outlet from the fan 18 communicates with the reservoir 6 through a passage 20. Shunting the fan 18 and valve 19 is a passage 21 which includes a relief valve 22 that is responsive to a predetermined fluid pressure differential which develops between the inlet to the valve 19 and the passage 20. The valve 19 is responsive to temperature, for example in the vehicle engine compartment, and when closed (so that the fan is inoperative) direct fluid flow through the system by way of passage 19a which shunts the fan 18. When the valve 19 opens fluid flows therethrough and by way of the rotor for operation of the fan 18 to the reservoir 6 - in this case the valve 19 closes· passage 19a and the relief valve 10 ensures that the fan 18 cannot be starved of fluid under pressure in the event that the steering gear 1 is operative. The relief valve 22 ensures that the fan 18 cannot be overloaded.

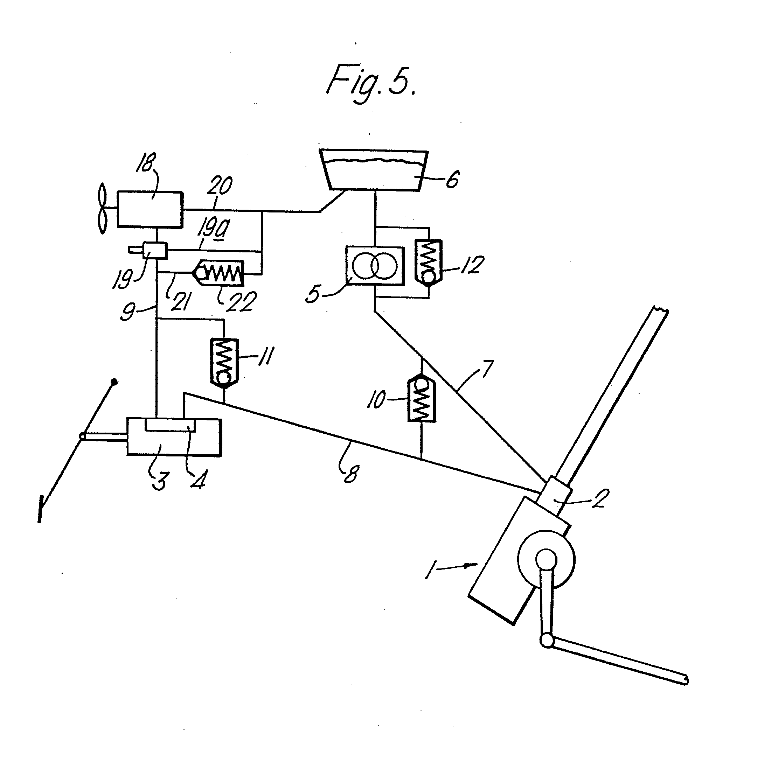

The system of Figure 5 includes the facilities of the fluid pressure driven steering gear, brake booster and fan of the systems in both Figures 1 and 4. In this arrangement the relief valve 10 ensures that the fan 18 and booster 3 are not starved of fluid under pressure, the relief valve 11 ensures that the fan 18 is not starved of fluid under pressure and the relief valve 22 ensures that the fan 18 is not overloaded.

If required the fan 18 can be replaced by any other device which is to be fluid pressure operated under control of the valve 19.

- 1 -

CLAIMS

1.    An hydraulic system comprising

    first (1) and second (3) fluid pressure operated
means;

    an open centre valve (2) controlling operation
of the first said means;

    a second valve (4) controlling operation of the
second said means;

    a fluid pressure source (5);

    CHARACTERISED  BY  said valves (2, 4) being
connected in series with each other and with the
pressure source (5) and wherein each said valve (2, 4)
and the fluid pressure operated means (1, 3) controlled
thereby is shunted by a relief valve (10, 11), the
relief valves (10, 11) being responsive respectively
to predetermined fluid pressure differentials which
are derived immediately upstream and downstream of the valves (2, 4) and fluid pressure operated means (1, 3) which they respectively shunt.

2. A system as claimed in claim 1 CHARACTERISED BY a third (18) or at least one additional fluid pressure operated means;

an additional valve (19) or valves controlling operation of the or each additional fluid pressure operated means (18);

said additional valve or valves (19) being connected in series with the serially connected open centre valve (2) and second valve (4) and wherein the or each said additional valve (19) and the additional fluid pressure operated means (18) controlled thereby is shunted by an additional relief valve (22) which is responsive to a predetermined fluid pressure differential which is derived immediately upstream and downstream of the additional valve (19) and additional fluid pressure operated means (18) which it shunts.

3. A system as claimed in either claim 1 or claim 2 CHARACTERISED IN THAT at least one of the second valve (4) and the additional valve or valves (19) is an open centre valve.

4. A system as claimed in any one of the preceding claims CHARACTERISED IN THAT at least one of the second valve (4) and the additional valve (19) or valves is a closure valve located upstream of and in series with the respective second or additional fluid pressure operated means.

5. A system as claimed in claim 4 CHARACTERISED IN THAT the closure valve is a closed centre valve.

6. A system as claimed in claim 4 CHARACTERISED IN THAT the closure valve (19) is a flow directional valve which communicates in series with said respective second means or additional means (18) and with a passage (19a) which shunts that second means or additional means; said flow directional valve (19) being controllable to open and close communication between the said passage (19a), the respective said second means or additional means (18) and the system upstream of that valve (19) and wherein the passage (19a), the respective said second means or additional means (18) and the respective relief valve or additional relief valve (22) associated therewith are connected in parallel.

7. A vehicle CHARACTERISED BY an hydraulic system as claimed in any one of the preceding claims.

8.    A vehicle as claimed in claim 7  CHARACTERISED IN  THAT  the, or at least one of the, open centre valves (4) controls actuation of an hydraulically operated power booster device.

9.    A vehicle as claimed in either claim 7 or claim 8 CHARACTERISED  IN  THAT  the, or at least one of the, open centre valves (2) controls actuation of power assistance means for vehicle steering.

10.   A vehicle as claimed in any one of claims 7 to 9 when appendant to claim 4  CHARACTERISED  IN  THAT the second or an  additional fluid pressure operated means (18) is a rotor actuation of which is under thermostatic control by the closure valve (19).

0042682

1/3

Fig.1.

Fig.2.

Fig.3.

Fig. 4.

Fig.5.

## DOCUMENTS CONSIDERED TO BE RELEVANT

| Category | Citation of document with indication, where appropriate, of relevant passages | Relevant to claim |
|---|---|---|
| X | GB - A - 1 111 637 (DANFOSS)<br>* claims; figures * | 1,2,7,<br>8,9 |
| X | US - A - 3 762 492 (RON)<br>* column 2, lines 9 to 21 * | 1, 7 |
| | GB - A - 1 006 465 (JARMUFEJLESZ-<br>TESI INTEZET)<br>* claims; figures * | 1 |
| | US - A - 2 464 110 (WRIGHT)<br>* claims * | 1,2 |
| A | US - A - 3 170 536 (VAN HOUSE) | |
| A | US - A - 3 590 689 (BREWER) | |
| A | US - A - 3 837 421 (RON) | |
| D | GB - A - 1 470 975 (CAMGEARS) | |
| D | GB - A - 1 456 836 (CAMGEARS) | |

------------

**CLASSIFICATION OF THE APPLICATION (Int. Cl.³)**

F 15 B 11/16
B 62 D 5/06
B 60 T 13/14

**TECHNICAL FIELDS SEARCHED (Int. Cl.³)**

F 15 B
B 62 D
B 60 T

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 28-09-1981 | PIRIOU |

EPO Form 1503.1  06.78